# EUROPEAN PATENT SPECIFICATION

(11) **EP 4 372 265 B1**
(45) Date of publication and mention of the grant of the patent: **31.12.2025**
(21) Application number: 23208007.7
(22) Date of filing: 06.11.2023
(51) Int. Cl.: F16N 21/02

(54) **OIL NIPPLE**
ÖLNIPPEL
TÉTINE POUR HUILE

(30) Priority: 16.11.2022 BE 202205926
(43) Date of publication of application: 22.05.2024
(73) Proprietor: De Meester, Kenny, 2550 Kontich (BE); De Meester, Richard Jeanne F, 2100 Deurne (BE)
(72) Inventor: DE MEESTER, Kenny, 2550 Kontich (BE)
(74) Representative: Bureau M.F.J. Bockstael NV

(56) References cited:
- EP-A2- 0 207 189
- CN-A- 107 101 085
- FR-A- 595 077
- FR-A- 597 122
- GB-A- 686 325
- GB-A- 726 484

## Description

The present invention relates to an oil nipple for supplying dry oil to moving parts.

Various types of grease nipples for supplying grease to moving parts of a machine, such as bearings, a guide block and the like are already known. EP0207189A2, FR597122A, FR595077A, CN107101085A and GB726484A show examples of such oil nipples.

These known grease nipples contain a main section and an attachment section that is connected to the main section. A passage is provided through the aforementioned main section and attachment section. Said passage is circular and/or widening from the main section toward the attachment section. Both the main section and the attachment section are thus provided with an opening, whereby the cross-section of the opening of the main section is smaller than the cross-section of the opening of the attachment section. A ball and a spring are mounted in the passage, whereby the spring extends over both the main section and the attachment section. Said ball contains a diameter that is greater than the opening in the main section and is located in the main section on the spring. The spring pushes the ball against the opening of the main section to seal said opening. In other words said ball acts as a seal of the relevant opening. The seal is intended to prevent dust or dirt from entering the grease nipple and thus also into the machine.

Grease will regularly be applied via the grease nipple to lubricate moving parts of a machine, such as bearings, a guide block and the like.

Practice has shown that the grease and/or excess grease collects and/or retains dirt and dust such that the dirt and dust may accumulate in the grease nipple as well as in the moving parts of machine. Consequently there is not only more wear and tear of said parts but extra maintenance is also needed of at least the relevant parts of the machine.

Additionally, the ball of the grease nipple or of the machine may get stuck due to the accumulating grease with dirt or dust such that the ball cannot roll and will be subject to wear and tear on one side.

Said accumulating grease will therefore retain more dirt and dust.

The purpose of the present invention is to provide a solution to the aforementioned and other disadvantages.

To this end the invention aims at an oil nipple for lubricating moving parts with dry oil by spraying the dry oil with an aerosol spray through a straw, whereby the oil nipple is provided with a main section and an attachment section that is connected to the main section, whereby a passage is provided through the main section and the attachment section, said passage tapering down over at least a part of the main section and/or at least a part of the attachment section from the main section toward the attachment section, whereby the passage is configured such that the straw of the aerosol spray can be inserted into the aforementioned passage.

An advantage of this is that the oil nipple allows dry oil to be supplied to moving parts of a machine, such that no or barely any dirt or dust will accumulate in the machine and/or the moving parts of the machine and/or the oil nipple.

The tapering passage also offers the advantage that it offers a simple and efficient guidance of the straw of the aerosol spray that is inserted into the passage.

Typically, dry oil is applied by spraying the dry oil with an aerosol spray through a straw. The aforementioned oil nipple offers the advantage that it is provided with a free passage, whereby the straw of the aerosol spray can be inserted into the aforementioned passage down to a desired depth into the passage. After the straw is inserted to the desired position, the dry oil can be applied by spraying with the relevant aerosol spray.

Preferably, the passage of the oil nipple is executed with two free ends, i.e. a main end to the main section and an attachment end to the attachment section.

An advantage of the aforementioned oil nipple is that it is free from obstructions in the passage and preferably is also provided with said free ends, such that when spraying the dry oil there is no counterpressure and the applied dry oil ends up on the desired components.

With the intention of better showing the characteristics of the invention, a few preferred embodiments of an oil nipple according to the invention are described hereinafter by way of an example, without any limiting nature, with reference to the accompanying drawings, wherein:
figure 1 schematically shows a perspective view of an oil nipple according to the invention;
figure 2 shows a cross-section according to line II-II in figure 1;
figure 3 shows an alternative embodiment of figure 2.

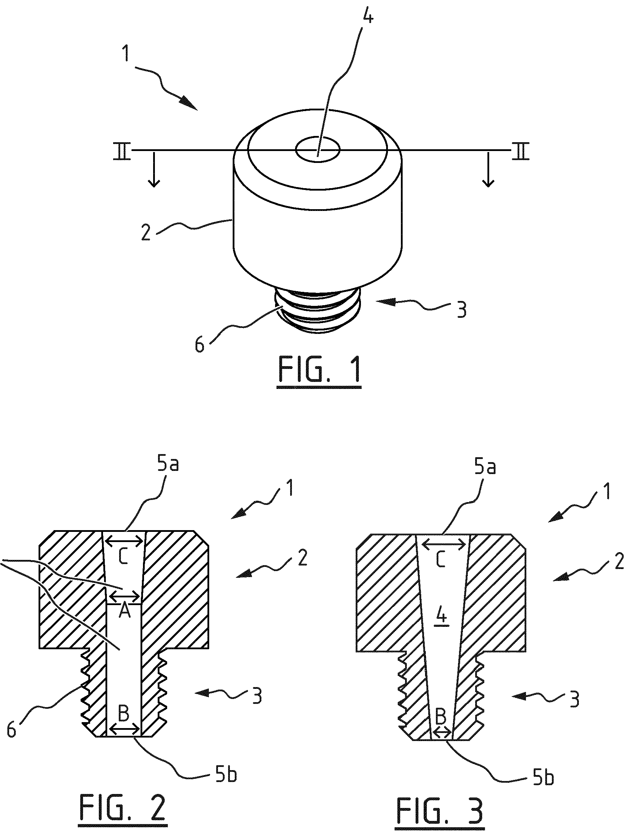

The oil nipple 1, as shown in figure 1, is intended for supplying dry oil to moving parts. To this end, the oil nipple 1 is provided with a main section 2 and an attachment section 3 that is connected to the main section 2. A passage 4 is provided through the main section 2 and the attachment section 3. Said passage 4 can taper down over at least a part of the main section 2 and/or at least a part of the attachment section 3 from the main section 2 toward the attachment section 3.

The passage 4 of the oil nipple 1 can thus be executed with two free ends, i.e. a main end 5a and an attachment end 5b.

In the example shown in figure 2, the aforementioned passage 4 contains a cross-section A between 2.3 mm and 4 mm, more preferably between 2.4 mm and 3.5 mm and most preferably between 2.5 mm and 3 mm.

Preferably, the attachment end 5b of the aforementioned passage contains a cross-section B between 2.3 mm and 4 mm, more preferably between 2.4 mm and 3.5 mm and most preferably between 2.5 mm and 3 mm.

Preferably, the cross-section B of the attachment end 5b and/or the attachment section 3 is greater than the cross-section C of the main end 5a and/or the main section 2.

Figure 3 shows a preferred embodiment whereby the passage 4 tapers conically from the main section 2 toward the attachment section 3.

The attachment section 3 can be provided with a screw thread 6 for attaching the oil nipple 1 into a cavity of a machine. To this end, the attachment section 3 can be executed as self-tapping section.

The main section 2 and/or the attachment section 3 may be made from polylactic acid and/or resin and/or metal and/or polyethylene terephthalate and/or epoxy. The attachment section 3 and/or the main section 2 may each be made from a different material. However, it is also possible to make the attachment section 3 and/or the main section 2 from the same material. The material from which the attachment section 3 and/or the main section 2 is made is adaptable at the customer's discretion and/or the requirements of the machine in which the oil nipple 1 is applied.

## Claims

1. Oil nipple (1) for supplying dry oil to moving parts by spraying the dry oil with an aerosol spray through a straw, **characterised in that** the oil nipple (1) is provided with a main section (2) and an attachment section (3) that is connected to the main section (2), whereby a passage (4) is provided through the main section (2) and the attachment section (3), said passage (4) tapering down over at least a part of the main section (2) and/or at least a part of the attachment section (3) from the main section (2) toward the attachment section (3), whereby the passage is configured such that the straw of the aerosol spray can be inserted into the aforementioned passage.

2. Oil nipple according to claim 1, **characterised in that** the aforementioned passage (4) contains a cross-section (A) between 2.3 mm and 4 mm, more preferably between 2.4 mm and 3.5 mm and most preferably between 2.5 mm and 3 mm.

3. Oil nipple according to claim 1 or 2, **characterised in that** the passage (4) tapers conically from the main section (2) toward the attachment section (3).

4. Oil nipple according to any one of the previous claims, **characterised in that** the attachment section (3) is provided with a screw thread (6) for attaching the oil nipple (1).

5. Oil nipple according to any one of the previous claims, **characterised in that** the main section (2) and/or the attachment section (3) are made from polylactic acid and/or resin and/or metal and/or polyethylene terephthalate and/or epoxy.

## Patentansprüche

1. Schmiernippel (1) zur Versorgung beweglicher Teile mit Trockenöl mittels Versprühen von Trockenöl mit einem Aerosolsprühgerät durch einen Strohhalm, **dadurch gekennzeichnet, dass** der Schmiernippel (1) mit einem Hauptabschnitt (2) und einem Befestigungsabschnitt (3) versehen ist, der mit dem Hauptabschnitt (2) verbunden ist; wobei ein Durchgang (4) durch den Hauptabschnitt (2) und den Befestigungsabschnitt (3) bereitgestellt ist; wobei der oben genannte Durchgang (4) über zumindest einen Teil des Hauptabschnitts (2) und/oder zumindest einen Teil des Befestigungsabschnitts (3) von dem Hauptabschnitt (2) in Richtung des Befestigungsabschnitts (3) hin eine nach unten gerichtete Verengung aufweist; wobei der Durchgang derart ausgestaltet ist, dass der Strohhalm des Aerosolsprühgeräts in den oben genannten Durchgang eingeführt werden kann.

2. Schmiernippel nach Anspruch 1, **dadurch gekennzeichnet, dass** der oben erwähnte Durchgang (4) einen Querschnitt (A) zwischen 2,3 mm und 4 mm, in bevorzugter Weise zwischen 2,4 mm und 3,5 mm und am meisten bevorzugt zwischen 2,5 mm und 3 mm aufweist.

3. Schmiernippel nach Anspruch 1 oder 2, **dadurch gekennzeichnet, dass** der Durchgang (4) eine konische Verengung von dem Hauptabschnitt (2) in Richtung des Befestigungsabschnitts (3) aufweist.

4. Schmiernippel nach einem der vorstehenden Ansprüche, **dadurch gekennzeichnet, dass** der Befestigungsabschnitt (3) mit einem Schraubgewinde (6) zur Befestigung des Schmiernippels (1) versehen ist.

5. Schmiernippel nach einem der vorstehenden Ansprüche, **dadurch gekennzeichnet, dass** der Hauptabschnitt (2) und/oder der Befestigungsabschnitt (3) aus Polymilchsäure und/oder einem Harz und/oder einem Metall und/oder Polyethylenterephthalat und/oder einem Epoxidharz gefertigt ist/sind.

## Revendications

1. Embout de graissage (1) destiné à alimenter en huile sèche des éléments mobiles par l'intermédiaire d'une pulvérisation d'huile sèche avec un pulvérisateur aérosol à travers une paille, **caractérisé en ce que** l'embout de graissage (1) est muni d'un tronçon principal (2) et d'un tronçon de fixation (3) qui est relié au tronçon principal (2) ; dans lequel un passage (4) est procuré à travers le tronçon principal (2) et le tronçon de fixation (3) ; dans lequel ledit passage (4) présente un rétrécissement orienté vers le bas sur au moins une partie du tronçon principal (2) et/ou au moins une partie du tronçon de fixation (3), à partir du tronçon principal (2) dans la direction du tronçon de fixation (3) ; dans lequel le passage est configuré d'une manière telle que la paille du pulvérisateur aérosol peut être insérée dans le passage qui a été mentionné ci-dessus.

2. Embout de graissage selon la revendication 1, **caractérisé en ce que** le passage (4) qui a été mentionné ci-dessus possède une section transversale (A) qui se situe entre 2,3 mm et 4 mm, de manière plus préférée entre 2,4 mm et 3,5 mm et de manière de loin préférée entre 2,5 mm et 3 mm.

3. Embout de graissage selon la revendication 1 ou 2, **caractérisé en ce que** le passage (4) présente un rétrécissement de forme conique à partir du tronçon principal (2) dans la direction du tronçon de fixation (3).

4. Embout de graissage selon l'une quelconque des revendications précédentes, **caractérisé en ce que** le tronçon de fixation (3) est équipé d'un filet de vis (6) destiné à la fixation de l'embout de graissage (1).

5. Embout de graissage selon l'une quelconque des revendications précédentes, **caractérisé en ce que** le tronçon principal (2) et/ou le tronçon de fixation (3) est/sont réalisé(s) à partir d'acide polylactique et/ou d'une résine et/ou d'un métal et/ou de polyéthylène téréphtalate et/ou d'un époxyde.
